# EUROPEAN PATENT SPECIFICATION

(11) **EP 3 534 053 B1**
(45) Date of publication and mention of the grant of the patent: **17.05.2023**
(21) Application number: 19160631.8
(22) Date of filing: 04.03.2019
(51) Int. Cl.: F16L 59/02, F16L 59/10, F16L 59/12

(54) **INSULATED PIPE-LIKE STRUCTURE AND METHOD FOR INSULATING A PIPE-LIKE STRUCTURE**
ISOLIERTE ROHR-ÄHNLICHE ANORDNUNG UND VERFAHREN ZUM ISOLIEREN EINER ROHR-ÄHNLICHEN ANORDNUNG
AGENCEMENT SIMILAIRE À UN TUYAU ISOLÉ ET PROCÉDÉ D'ISOLATION D'UN AGENCEMENT SIMILAIRE À UN TUYAU

(30) Priority: 02.03.2018 DE 102018001678
(43) Date of publication of application: 04.09.2019
(73) Proprietor: Knauf Insulation SPRL, 4600 Visé (BE)
(72) Inventor: Guillemot, Gwenaël, 1435 Mont Saint Guibert (BE); Regel, Andreas, 1435 Mont Saint Guibert (BE)
(74) Representative: ARC-IP

(56) References cited:
- EP-A1- 0 388 521
- WO-A1-2015/144590
- DE-A1- 2 920 895
- FR-A- 1 602 270

## Description

The present invention relates to thermal insulation of pipe-like structures such as pipes or ducts.

Various existing systems are known for insulating pipes and/or ducts to provide thermal insulation. Wired mineral fiber mat is typically used for this type of application, particularly since its low binder or binder-free configuration contributes to good fire protection and it is sufficiently soft and deformable to be wrapped around the outer shape of the pipe to be insulated. In most cases, individual wired mat strips are placed next to each other around the pipe and/or duct to form a continuous insulation layer around the pipe. An exterior cladding, for example a metal cladding such as an aluminum cladding, is then provided around the insulation material.

WO2015/144590 discloses an insulated pipe assembly. EP0388521 discloses thermal insulation for pipes or containers. FR1602270 relates to a pipe with thermal insulation, comprising one or more layers of synthetic material foam surrounding the pipe itself. DE2920895 relates to a pipe insulation shell made of mineral wool, wherein the pipe insulation shell has sections of different material density in its axial extension.

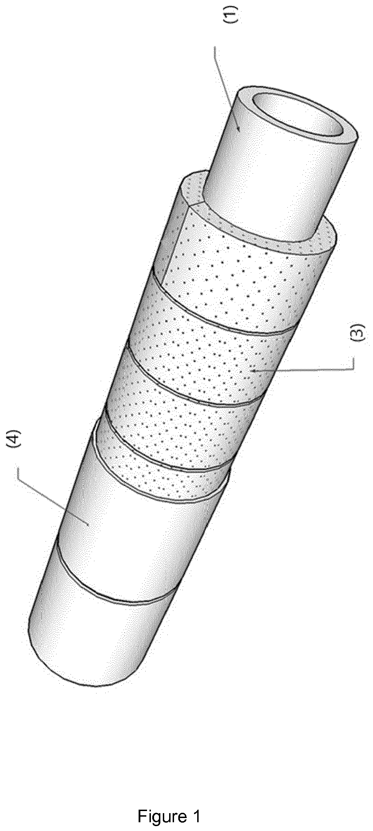

Figure 1 shows a known pipe insulation system wherein mineral wool strips are arranged around a pipe to be insulated in an alternating manner so as to provide a continuous insulation layer. As an outermost layer, a metal cladding is provided in the form of adjacently arranged metal cladding strips.

The above well-known configuration suffers from the drawback that for situations where the target thickness of the insulation layer exceeds a certain value and/or for pipes of large diameter, spacer constructions are required to keep the metal cladding at the intended distance from the pipe since the wired mat itself cannot support the metal cladding due to its softness. In addition to increasing installation work and costs, such spacer constructions create thermal bridges resulting in a loss of thermal insulation properties of the system.

In view of the above, the technical problem underlying the present invention is to provide an insulating system for a pipe-like structure and which achieves excellent thermal insulation combined with noise and fire protection without the need of spacer constructions to support the metal cladding surrounding the insulation material even for large pipe diameters and/or high thicknesses of the insulation layer.

As used herein, the term "pipe-like structure" means a tubular section or hollow tube, notably having a circular or polygonal cross-section, in which a fluid such as a gas or a liquid is retained or flows. The pipe-like structure may be a ventilating and air conditioning (HVAC) duct; a duct; a pipe; a metal pipe; a pipe elbow; a boiler; a chimney or a tank.

The solution to the above technical problem is achieved by providing the embodiments defined in the claims. The invention provides an insulated pipe-like structure according to claim 1 and a method for insulating a pipe-like structure according to claim 13. Optional features of the invention are set out in the dependent claims.

In particular, in accordance with one aspect not according to the invention, it is provided an insulating system for a cladded pipe-like structure (1) comprising:
- a first type of mineral wool strips (2) configured to be arranged around the pipe in a radial direction (R) of the structure (1);
- a second type of mineral wool strips (3) configured to be arranged around the structure (1) in a radial direction (R) of the structure (1);
wherein
- the first type of mineral wool strip (2) has a higher compression strength than the second type of mineral wool strip (3); and
- the first type of mineral wool strips (2) and the second type of mineral wool strips (3) are configured to be arranged adjacent to each other and alternately in an axis direction (A) of the structure (1) to form a first insulation layer (5).

In accordance with another aspect not according to the invention, it is provided an insulating system for a cladded pipe-like structure (1) comprising:
- a plurality of individual pieces of a first type of mineral wool strips (2) configured to be arranged around the pipe in a radial direction (R) of the structure (1);
- a plurality of individual pieces of a second type of mineral wool strips (3) configured to be arranged around the structure (1) in a radial direction (R) of the structure (1);
wherein
- the first type of mineral wool strip (2) has a higher compression strength than the second type of mineral wool strip (3); and
- the first type of mineral wool strips (2) and the second type of mineral wool strips (3) are configured to be arranged adjacent to each other and alternately in an axis direction (A) of the structure (1) to form a first insulation layer (5).

In accordance with a further aspect not according to the invention, it is provided a pipe-like structure, notably a cladded pipe-like structure selected from: a ventilating and air conditioning (HVAC) duct; a duct; a pipe; a metal pipe; a pipe elbow; a boiler; a chimney and a tank, provided with an insulating system comprising:
- a first type of mineral wool strips (2) configured to be arranged around the pipe in a radial direction (R) of the structure (1);
- a second type of mineral wool strips (3) configured to be arranged around the structure (1) in a radial direction (R) of the structure (1);
wherein
- the first type of mineral wool strip (2) has a higher compression strength than the second type of mineral wool strip (3); and
- the first type of mineral wool strips (2) and the second type of mineral wool strips (3) are configured to be arranged adjacent to each other and alternately in an axis direction (A) of the structure (1) to form a first insulation layer (5).

The insulation system is particularly useful with respect to insulated structures for which:
- 25 mm ≤ DN ≤ 200 mm or ≤ 220 mm and Ti ≥ 80 mm or ≥ 90 mm or ≥100mm or ≥ 105 mm; or
- 230 mm ≤ or 220 mm or ≤ 200 mm ≤ DN ≤ 250 mm or ≤ 270 mm and Ti ≥ 70 mm or ≥ 80 mm or ≥ 90 mm or ≥ 95 mm or ≥ 105 mm; or
- 280 mm ≤ or 250 mm ≤ DN ≤ 300 mm or ≤ 320 mm and Ti ≥ 60 mm or ≥ 80mm or ≥ 85 mm , ≥ 95 mm or ≥ 105 mm; or
- 300 mm ≤ or 330 mm ≤ DN ≤ 350 mm or ≤ 370 mm and Ti ≥ 50 mm or ≥ 60 mm or ≥ 65 mm, ≥ 75 mm, ≥ 85 mm, ≥ 95 mm or ≥ 105 mm; or
- 350 mm ≤ or 380 mm ≤ DN ≤ 400 mm or ≤ 420 mm and Ti ≥ 40mm or ≥ 50 mm, ≥ 55 mm, ≥ 65 mm, ≥ 75 mm, ≥ 85 mm, ≥ 95 mm or ≥ 105 mm; or
- DN ≤ 400 mm or ≤ 430 mm and Ti ≥ 20 mm or ≥ 25 mm;
when DN is the nominal diameter of the structure and Ti is the thickness of the mineral wool insulation. The first and/or second insulation layer may have a thickness ≤ 200 mm, preferably ≤ 150 mm, more preferably ≤ 130 mm. In a preferred embodiment of the invention, the first and/or second insulation layer has a thickness of 120 mm or less so that the total thickness of the insulation layer is 120 mm or less (in a single layer configuration) or 240 mm or less (in a two-layer configuration). Alternatively, when in a two-layer configuration, the total thickness of the first and second insulation layers may be ≤ 150 mm, preferably ≤ 120 mm, more preferably ≤ 90 mm. In a two-layer configuration the first and second insulation layers may have the same or different thicknesses. The nominal diameter of the structure, for example a pipe, may be ≤ 1100 mm.

The first type of mineral wool strips (2) used in the insulating system has excellent compression strength which is higher than that of the second type of mineral wool strips (3). The compression strength of the first type of mineral wool strips (2) is not particularly restricted as long as it is sufficiently high to support a cladding strip(s) (4), notably a metal cladding strip, positioned on its outer surface.

The compression strength of the first type of mineral wool strips (2) is preferably at least 8kPa more preferably at least 10kPa more preferably at least 11kPa and most preferably at least 12kPa, in accordance with EN826. The first type of mineral wool strips (2) is configured to be arranged around the structure (1) in a radial direction (R) of the structure (1) to be insulated, i.e. the dimensions of the first mineral wool strips (2) are such that the first mineral wool strips (2) can be wrapped around the structure (1) to be insulated. Since the first mineral wool strips (2) exhibits an excellent compression strength, it is possible to avoid the use of a spacer construction to support the metal cladding (4) surrounding the insulation material.

As used herein, the term compression strength means the force applied which provokes a 10% deformation.

The second type of mineral wool strips (3) have excellent thermal insulation properties, which are preferably better those that of the first type of mineral wool strips (2). For example the thermal conductivity of the second type of mineral wool strips is lower than the thermal conductivity of the first type of mineral wool strips.

The thermal conductivity (λ) in mW/(m.K) according to EN12667 of the first and/or second type of mineral wool strips is preferably ≤ 45 at 50°C and/or ≤ 55 at 100°C and/or ≤ 79 at 200°C and/or ≤ 120 at 300°C and/or ≤ 160 at 400°C and/or ≤ 220 at 500°C and/or ≤ 240 at 600°C; and more preferably ≤ 44 at 50°C and/or ≤ 53 at 100°C and/or ≤ 77 at 200°C and/or ≤ 110 at 300°C and/or ≤ 155 at 400°C and/or ≤ 215 at 500°C and/or ≤ 230 at 600°C.

The thermal conductivity (λ) in mW/(m.K) according to EN8497 of the first and/or second type of mineral wool strips is preferably ≤ 42 at 50°C and/or < 49 at 100°C and/or ≤ 56 at 150°C and/or ≤ 66 at 200°C and/or ≤ 93 at 300°C; and more preferably ≤ 39 at 50°C and/or ≤ 47 at 100°C and/or ≤ 54 at 150°C and/or ≤ 64 at 200°C and/or ≤ 91 at 300°C.

It is a preferable to use the European standard adapted for the tested mineral wool strip when measuring the thermal conductivity.

The first and/or second type of mineral wool strips (2/3) preferably has a fire rating of at least a class B and more preferably class A2 or A1 according to EN 13501-1 . It may be rated for use at continuous operating temperatures up to a maximum service temperature (MST) which is ≥ 100°C, ≥ 150°C, ≥ 200°C, ≥ 300°C, ≥ 400°C, ≥ 500°C or ≥ 600°C and/or ≤ 1000 °C or ≤ 800 °C. The MST is determined according to EN 14706 or EN 14707.

The second type of mineral wool strips (3) is configured to be arranged around the structure (1) in a radial direction (R) of the structure (1) to be insulated, i.e. the dimensions of the second mineral wool strips (3) are such that the second mineral wool strips (3) can be wrapped around the structure (1) to be insulated. The second mineral wool strips (3) used in the present invention advantageously provide excellent thermal insulation and fire protection of the insulating system.

At least the first type of mineral wool strip(s) preferably comprises a plurality of grooves or cut away sections at its inside face to facilitate wrapping of the strip around large structures, for example around a pipe having a large diameter. The configuration of the grooves or cut away sections is preferably arranged to ensure that the mineral wool strip(s) closely fits the structure when it is wrapped around the structure such that the grooves or cut away sections are closed when the strip is wrapped around the structure.

The second type of mineral wool strip(s) is preferably free of such grooves or cut away sections at its inside face. The second type of mineral wool strip(s) may be adapted to be installed in a flat surface or around a pipe-like structure.

In a preferred embodiment, the first type of mineral wool strip(s) comprises a plurality of grooves or cut away sections at its inside face and the second type of mineral wool strip(s) is free of grooves or cut away sections at its inside face.

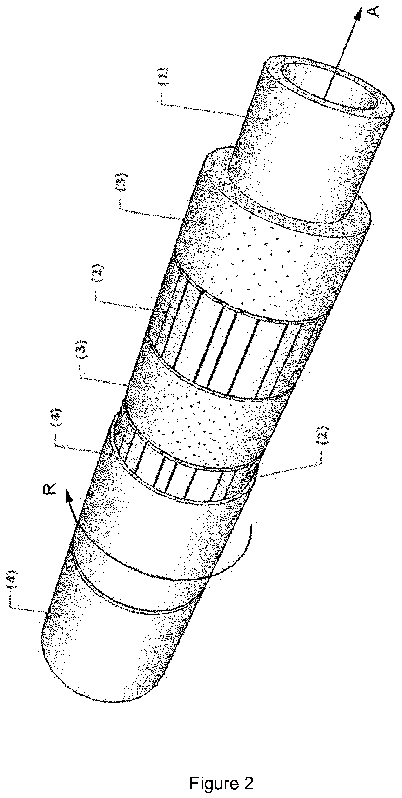

As can be seen from Figure 2, the first type of mineral wool strips (2) and the second type of mineral wool strips (3) are configured to be arranged adjacent to each other and alternately in an axis direction (A) of the structure (1) to form a first insulation layer (5). This configuration provides a continuous insulation layer based on an alternating arrangement of mineral wools strips of the first type (2) and the second type (3) to form a continuous i.e. preferably gap-free, insulation layer. In a preferred embodiment, the first and second mineral wool strips, providing the first layer, are not secured together, notably by way of an adhesive. The strips are individual pieces, which are positioned in an alternating arrangement on the external surface of the structure so to provide a first insulating layer.

The first and/or the second types of mineral wool strips are preferably arranged in contact with an external surface of the pipe-like structure to be insulated.

The insulating system may further comprise at least one cladding strip (4) configured to be arranged around the first and second type of mineral wool strips (2, 3) in a radial direction (R) of the structure (1). This cladding preferably provides the outermost layer of the insulating system for the structure (1). It is formed of at least one strip of cladding but preferably comprises, depending on the dimensions of the structure to be insulated, a number of cladding strips sufficient to substantially cover a major part of the outer surface of the insulation layer when arranged adjacent next to each other. The cladding strip may comprise a metal and/or a plastic such as PVC; it may be a metal cladding, for example an aluminum cladding.

Due to the specific alternating arrangement of the first and second mineral wool strips (2, 3), the insulation layer provides excellent thermal insulation properties and advantageous support properties to carry the outer cladding. It is therefore possible and indeed preferred to avoid the use of spacer constructions to support of the cladding.

In preferred embodiments, the first and/or second mineral wool strips (2, 3) are mass produced mineral wool insulation products whose use is not limited to use in accordance with the invention; thus, in one of its aspects the invention provides a solution to the problems described above using a combination of first and second mineral wools strips of which each is a multi-purpose mineral wool strip. This avoids the need for manufacture of a specific or single purpose mineral wool insulation product to solve the problems described above. Furthermore, optimization of the combination of compression strength and thermal insulation properties can be achieved by simply selecting the relative dimensions in the axis direction of the pipe-like structure of the first and second mineral wools strips.

According to one embodiment of the present invention, the at least one cladding strip (4) is configured to be arranged around at least two mineral wool strips of the first type (2) which are spaced apart from each other along the axis direction (A) of the pipe. In other words, the at least one cladding strip (4), which is arranged around the first insulation layer (5) formed by the alternatingly arranged strips of the first and second type of mineral wool strips (2, 3) at least partly covers two individual strips of mineral wool of the first type (2), which serve as a support to carry the cladding strip (4).

According to a particular embodiment, both ends of the at least one cladding strip (4) are arranged over the first type of mineral wool strips (2), more preferably in a center region with respect to the width on the axis direction (A) of the first type of mineral wool strips (2). As indicated in Figure 2, the term "ends" means the edges of the metal cladding strips (4) or the mineral wool strips (2, 3) in respect to the axis direction (A) of the structure (1). Thus, it is preferred that the adjacent ends of two individual cladding strips (4) are jointly positioned over the surface layer of the first type of mineral wool strips (2) having a higher compression strength than the second type of mineral wool strips (3). Thus, the edge portions of each individual cladding strip (4) are respectively supported by the mineral wool strips of the first type (2).

As used herein, the "center region" means the region in the middle of the strips and remote from the end of the strips with respect to the width on the axis direction (A) of the strips. According to a preferred embodiment, the center region makes up 80% or less of the width on the axis direction (A) of the strips, more preferably 70% or less, more preferably 60% or less, more preferably 50% or less, more preferably 40% or less, more preferably 30% or less, more preferably 20% or less and most preferably 10% or less. Due to the above-described specific arrangement of the cladding with respect to the first and second types of mineral wool strips (2, 3), keeping the cladding in the intended distance from the pipe can be advantageously assured without the need of spacer constructions. Preferably, the cladding and the mineral wool strips are not secured together by way of an adhesive.

The first type of mineral wool strips (2) may be a mineral wool pipe mat or mineral wool lamella mat. Mineral wool pipe mats are known in the art and are commercially available from Knauf Insulation e.g. under the tradename Power-teK PB 640 ALU, Power-teK PB 680 ALU or Power-teK LM 550 ALU. Such mineral wool pipe mats may preferably exhibit one or more of the following characteristics:
- thermal conductivity (λ) in mW/(mK) according to EN ISO 8497 of < 45 at 50°C and/or ≤ 55 at 100°C and/or ≤ 79 at 200°C and/or ≤ 120 at 300°C;
- nominal density of from 60 to 160 kg/m³, preferably from 80 to 140 kg/m³, more preferably even more preferably 80 to 120 kg/m³; and/or
- fire rating of at least a class B and more preferably class A2 or A1 according to EN 13501-1.

The second type of mineral wool strips (3) may be a wired mesh mineral wool mat. As used herein, the expression "wired mesh mineral wool mat" means a mineral wool mat (blanket) held together by being sandwiched between meshes covering its major surfaces. Wired mesh mineral wool mats are known in the art and are commercially available from Knauf Insulation e.g. under the tradename Power-teK WM 620, Power-teK WM 640, Power-teK WM 660 and Power-teK WM 680.

Particularly for applications with low service temperatures (< 300°C), notably between 100°C and 300 °C, the second type of mineral wool strips may comprise at least 90% by weight glass mineral wool. Particularly for applications with higher service temperatures (>300°C), notably between 450°C and 750°C, second type of mineral wool strips comprising at least 90% by weight rock mineral fibres is preferred, notably for its temperature resistance. The fibres of the glass mineral wool may: comprise > 55 wt-% silicon oxide (SiO₂) and/or < 10 wt-% aluminium oxide (Al₂O₃); and/or an alkali/alkaline-earth ratio of their composition which is > 1; and/or a combined quantity of CaO and MgO < 20 wt-%; and/or a combined quantity of Na₂O and K₂O > 8 wt%; and/or a density ≥ 5 kg/m³ and/or ≤ 60 kg/m³.

The rock mineral fibres may: comprise between 30 and 55 wt-% SiO₂ and/or between 10 and 30 wt-% Al₂O₃; and/or an alkali/alkaline-earth ratio of their composition which is < 1; and/or a combined quantity of CaO and MgO ranging from 20 to 30 wt-%; and/or a combined quantity of Na₂O and K₂O < 8 wt%; and/or have a density ≥ 65 kg/m³ and/or ≤ 200 kg/m³; and/or have a softening point in the range 900-1200°C, notably in the range 1000-1100°C.

The term "softening point" as used herein means the temperature at which the mineral fibre composition deforms under its own weight and which occurs at a viscosity of 10^{7.6} poise (10^{6.6} Pa.s). Preferably the softening point herein is determined in accordance with International standards ISO 7884-1 and ISO 7884-2; alternatively, it may be determined in accordance with International standards ISO 7884-1 and ISO 7884-6 (versions in force at 01 March 2019).

The first and/or second type of mineral wool strips may comprise a binder, notably an organic binder. When an organic binder is used, the quantity of the binder may be ≤ 5 wt-%, ≤ 4 wt-%, ≤ 3 wt-%, ≤ 2wt-%, ≤ 1.5 wt-%, ≤ 1 wt-%, ≤ 0.8 wt-%, ≤ 0.5 wt-%, ≤ 0.2 wt-% or ≤ 0.1 wt-%. Preferably, the binder content of the first type of mineral wool strips is ≤ 3 wt-%. Preferably, when a binder is used for the second type of mineral wool strips the quantity of binder is ≥ 0.2 and ≤ 0.8 wt-%. The absence of significant quantities of organic binder is helpful when fire resistant properties are desired. The insulating blanket and/or insulating element may be free of organic binder. The second type of mineral wool strips may have an organic content and/or a hydrocarbon content which is ≤ 0.5 wt-%, ≤ 0.2 wt-% or ≤ 0.1 wt-%. The organic content and/or the hydrocarbon content may include organic compounds comprised in any organic binder. Preferably the second type of mineral wool strips is substantially free of organic materials with an organic content and/or a hydrocarbon content which is ≤ 0.5 wt-%.

The nominal density of the second type of mineral wool strips, for example wired mesh mineral wool mat, is not particularly limited. According to a preferred embodiment, the nominal density is from 60 to 120 kg/m³, more preferably from 65 to 100 kg/m³, more preferably from 70 to 90 kg/m³, and most preferably from 75 to 85 kg/m³.

The first (2) and second (3) types of mineral strips may have substantially the same density, which means that the difference of density between the first (2) and second (3) types of mineral wool strips is less than 20%, preferably less than 10%, more preferably less than 5%. In a preferred embodiment, the two types of mineral wool strips with different compression strength have substantially the same density. They are thus easier to handle on site and avoid having one type of mineral wool strips being heavier than the other one.

The thicknesses, lengths and widths of the first and/or second mineral wool strips (2, 3) are not particularly limited and may be chosen depending on the pipe (1) to be insulated and the used metal cladding strips (4). For example, the first and/or second mineral wool strips (2) may have :
- a thickness of from 30 mm to 200, preferably from 30 mm to 120 mm; and/or
- a width of from 50 to 1000 mm, preferably from 100 to 700 mm; and/or
- a length from 1 to 10 m.

The widths of the first and second mineral wool strips (2, 3) may be the same or different. Moreover, a mineral wool strip of the first type (2) may have the same width as another mineral wool strip of the first type (2) or a different width, and a mineral wool strip of the second type (3) may have the same width as another mineral wool strip of the second type (3) or a different width.

The at least one cladding strip (4), notably the metal cladding strip, which may be used in the insulating system is not particularly limited and any cladding strip known in the art such as e.g. an aluminum cladding strip may be used. The thickness, length and width of the at least one cladding strip (4) are not particularly limited and may be chosen depending on the structure (1) to be insulated, notably a pipe, and the used mineral wool strips of the first and second types (2, 3). For example, the at least one cladding strip may have a thickness of from 0,3 mm to 2 mm and/or a length of from 500 to 5000 mm and/or a width of from 900 to 1300 mm.

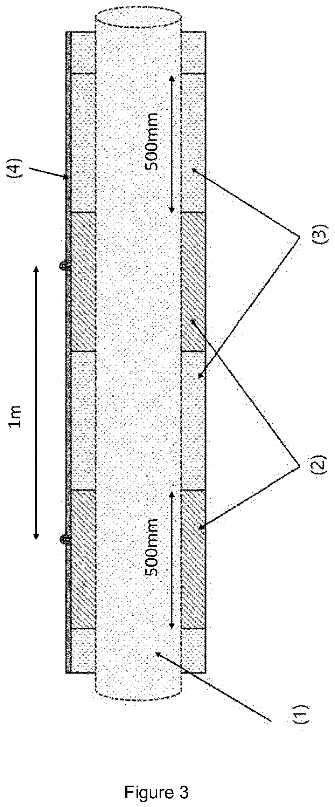

Figure 3 shows a specific embodiment of the insulating system of the present invention. In Figure 3, each of the first type of mineral wool strips (2, Knauf Power-teK PB) and each of the second type of mineral wool strips (3, Knauf Power-teK WM) have the same width (e.g. 500 mm). The metal cladding strip (4) is arranged around two mineral wool strips of the first type (2) which are spaced apart from each other along the axis direction (A) of the pipe or duct (1). In particular, both ends of the at least one metal cladding strip (4) are arranged over the first type of mineral wool strips (2) in a center region with respect to the length on the axis direction (A) of the first type of mineral wool strips (2).

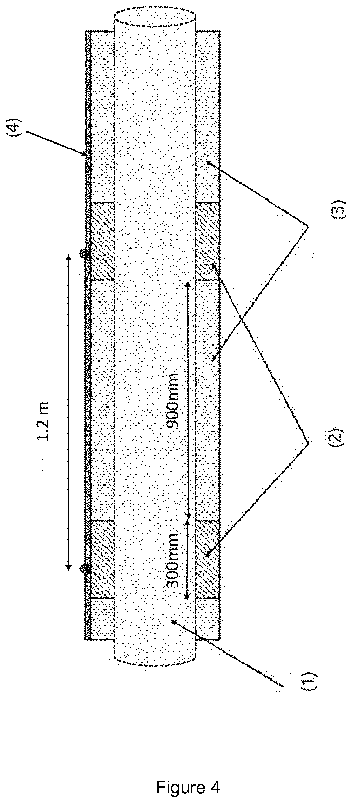

Figure 4 shows another specific embodiment of the insulating system of the present invention. The embodiment of Figure 4 differs from the embodiment of Figure 3 only in that the widths of each of the first type of mineral wool strips (2) and each of the second type of mineral wool strips (2) are different from each other (e.g. 300 mm vs. 900 mm)

According to a further embodiment, the insulating system of the present invention further comprises a second insulation layer (6) arranged over the first insulation layer (5), notably between the first insulation layer (5) and at least one cladding strip (4),
wherein the second insulation layer (6) comprises a third type of mineral wool strips (2') and a fourth type of mineral wool strips (3') arranged adjacent to each other in an axis direction (A) of the structure (1),
wherein the third type of mineral wool strips (2') has a higher compression strength than the fourth type of mineral wool strips (3'), and
wherein the third type of mineral wool strips (2') is arranged at least partly over the first type of mineral wool strips (2).

The third type of mineral wool strips (2') may have the same properties as described hereinabove with respect to the first type of mineral wool strips (2). The fourth type of mineral wool strips (3') may have the same properties as described hereinabove with respect to the second type of mineral wool strips (3).

In a preferred embodiment, the first (2), second (3), third (2') and fourth (3') types of mineral strips have substantially the same density, which means that the difference of density between each type of mineral wool strips is less than 20%, preferably less than 10%, more preferably less than 5%.

The at least one cladding strip (4) may be configured to be arranged around at least two mineral wool strips of the third type (2') which are spaced apart from each other along the axis direction (A) of the structure (1). According to a particularly preferred embodiment, both edges of the at least one cladding strip (4) are arranged over the third type of mineral wool strips (2'), more preferably in a center region with respect to the length on the axis direction (A) of the third type of mineral wool strips (2'). The mineral wool strips of the third type (2') are preferably arranged at least partly and more preferably entirely on the outer surface layer of the mineral wool strips of the first type (2), and the mineral wool strips of the fourth type (3') are preferably arranged at least partly on the mineral wool strips of the second type (3).

Due to the specific arrangement of the specific first and second insulating layers (5, 6), it is possible to refrain from using a spacer construction to support the cladding (4) surrounding the insulation layers (5, 6), while even better thermal insulation as well as noise and fire protection of the insulating system can be achieved.

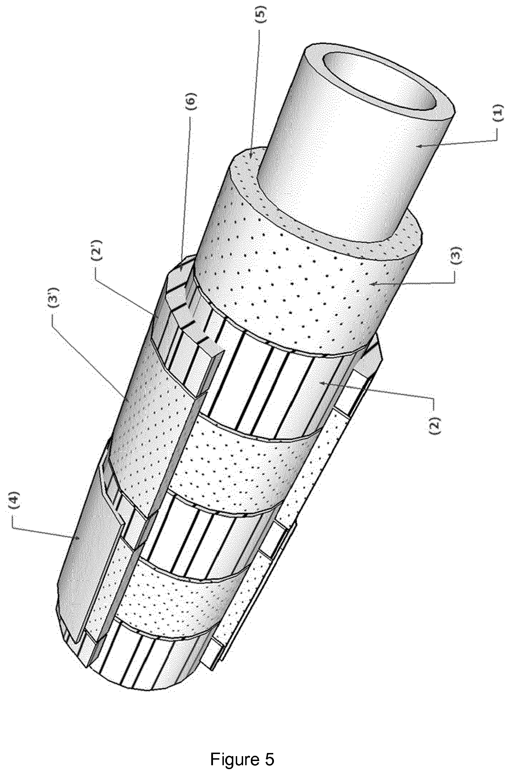

Figure 5 shows a two-layer insulation system according to the present invention, wherein around a pipe (1) to be insulated mineral wool strips of the first (2, Knauf Power-teK PB) and second type (3, Knauf Power-teK WM) are arranged adjacent and alternately to form a first insulation layer (5). Further, mineral wool strips of the third type (2', Knauf Power-teK PB) and the fourth type (3', Knauf Power-teK WM) are adjacently and alternately arranged on the outer surface of the first insulation layer (5) to form the second insulation layer (6) which results in greatly improved insulation properties. In this configuration, the mineral wool strips of the first and third type (2, 2') are mineral wool strips having a higher compression strength than the mineral wool strips of the second and fourth type (3, 3'). By providing the strips of the first and third type of mineral wool strips (2, 2') on top of each other, the at least one metal cladding strip (4) is effectively supported by the stack mineral wool strips of high compression strength, so that any spacer constructions which would become necessary are advantageously avoided.

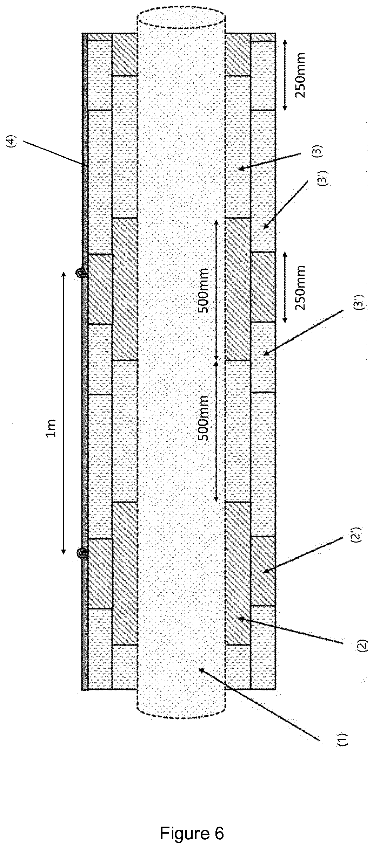

Figure 6 shows a specific embodiment of such an insulating system of the present invention having a two-insulating layer structure (5, 6). The first type of mineral wool strips (2, Knauf Power-teK PB) and the second type of mineral wool strips (3, Knauf Power-teK WM) are arranged adjacent to each other and alternately in an axis direction (A) of the pipe or duct (1) to form a first insulation layer (5). Each of the first type of mineral wool strips (2) and each of the second type of mineral wool strips (3) have the same width (e.g. 500 mm). The third type of mineral wool strips (2') and the fourth type of mineral wool strips (3') are arranged adjacent to each other in an axis direction (A) of the pipe or duct (1) to form a second insulation layer (6). The mineral wool strips of the third type (2', Knauf Power-teK PB) are arranged fully on the mineral wool strips of the first type (2), and the mineral wool strips of the fourth type (3', Knauf Power-teK WM) are arranged for the most part on the mineral wool strips of the second type (3). Each of the third type of mineral wool strips (2') have the same width (e.g. 250 mm), whereas the mineral wool strips of the fourth type (3') differ in width (e.g. 500 mm vs. 250 mm). The at least one metal cladding strip (4) is arranged around the second insulation layer (6) in a radial direction (R) of the pipe or duct (1). The metal cladding strip (4) is arranged around two mineral wool strips of the first type (2) which are spaced apart from each other along the axis direction (A) of the pipe or duct (1) as well as around two mineral wool strips of the third type (2') which are spaced apart from each other along the axis direction (A) of the pipe or duct (1). In particular, both ends of the at least one metal cladding strip (4) are arranged over the first type of mineral wool strips (2) in a center region with respect to the length on the axis direction (A) of the first type of mineral wool strips (2) as well as over the third type of mineral wool strips (2') in a center region with respect to the length on the axis direction (A) of the third type of mineral wool strips (2').

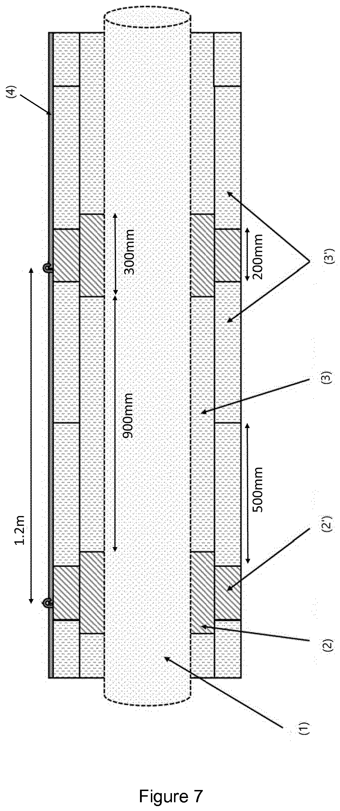

Figure 7 shows another specific embodiment of the insulating system of the present invention having a two-insulating layer structure. The embodiment of Figure 7 differs from the embodiment of Figure 6 in that also the widths of each of the first type of mineral wool strips (2) and each of the second type of mineral wool strips (3) are different from each other (e.g. 300 mm vs. 900 mm).

According to the present invention, the insulating system comprises the pipe-like structure (1) to be insulated. The structure is not particularly limited and any pipe-like structure of any material which is to be insulated can be used.

In a further aspect not according to the invention, it is provided a use of the insulating system for insulating a pipe-like structure (1), notably a cladded pipe-like structure, comprising:
- a first type of mineral wool strips (2) configured to be arranged around the structure in a radial direction (R) of the structure (1);
- a second type of mineral wool strips (3) configured to be arranged around the structure in a radial direction (R) of the structure (1);
wherein
- the first type of mineral wool strips (2) has a higher compression strength than the second type of mineral wool strips (3); and
- the first type of mineral wool strips (2) and the second type of mineral wool strips (3) are configured to be arranged adjacent to each other and alternately in an axis direction (A) of the structure (1) to form a first insulation layer (5), notably wherein the first type of mineral wool strips (2) and the second type of mineral wool strips (3) are individual pieces.

In still a further aspect not according to the invention, it is provided a method for insulating a pipe-like structure (1), comprising the steps of:
arranging a first type of mineral wool strips (2) and a second type of mineral wool strips (3) adjacent to each other and alternately in an axis direction (A) of the structure (1) to form a first insulation layer (5); and
arranging at least one cladding strip (4), notably a metal cladding strip, around the first and second type of mineral wool strips (2, 3) in a radial direction (R) of the structure (1);
wherein the first type of mineral wool strips (2) has a higher compression strength than the second type of mineral wool strips (3).

In still a further aspect not according to the invention, it is provided a method for insulating a pipe-like structure (1), comprising the steps of:
- wrapping a first type of mineral wool strips (2) around the pipe-like structure and subsequently joining the two terminal edges of the first type of mineral wool strips (2) contacting each other;
- subsequently wrapping a second type of mineral wool strips (3) around the pipe-like structure and adjacent to the first type of mineral wool strips (2) and subsequently joining the two terminal edges of contacting each other;
- subsequently arranging at least one cladding strip (4), notably a metal cladding strip, around the first and second type of mineral wool strips (2, 3) in a radial direction (R) of the structure (1);
wherein the first type of mineral wool strips (2) has a higher compression strength than the second type of mineral wool strips (3).

Preferably, the method comprises, prior to arranging the cladding strip, wrapping a further first type of mineral wool strips (2) around the pipe-like structure and adjacent to the second type of mineral wool strips (3) and subsequently joining the two terminal edges of the first type of mineral wool strips (2) contacting each other. Preferably, the method comprises altering wrapping a plurality of the first and the second type of mineral wool strips in an axis direction (A) of the structure (1) to form a first insulation layer (5) prior to arranging the cladding strip.

In preferred embodiments, the first type of mineral wool strips are provided in a flat packaging and the method comprises removing the first type of mineral wool strips from a flat packaging prior to wrapping them around the pipe-like structure. Preferably, the second type of mineral wool strips are provided in the form of a roll and the method comprises unrolling a roll of the second type of mineral wool strips prior to wrapping around the pipe-like structure. The length of a roll of the second type of mineral wool strips is preferably greater that the external circumference or periphery of the pipe-like structure and the method comprises cutting a length of the second type of mineral wool strips from the roll, for example; prior to or subsequent to wrapping around the pipe-like structure.

In one embodiment of the method for insulating a structure of the present invention, the insulating system for a pipe-like structure of the present invention is used. Accordingly, the explanations/definitions provided above with respect to the structure (1), the mineral wool strips of the first (2), second (3), third (2') and fourth type (3'), and the at least one cladding strip (4) of the insulating system of the present invention also apply for the method for insulating a pipe-like structure of the present invention.

The step of arranging a first type of mineral wool strips (2) and a second type of mineral wool strips (3) is not particularly limited, and the first type of mineral wool strips (2) and the second type of mineral wool strips (3) may e.g. be wrapped around the pipe-like structure to be insulated and the terminal edges may be fixed by using an adhesive, such as an adhesive tape of liquid adhesives, for example a self-adhesive aluminum tape. Alternatively, the terminal edges may be joined by a hook and loop attachment system provided on the external surface of one or more mineral wool strips. Herein, the expression "terminal edges" means the edges of the mineral wool strips/metal cladding strips which are joined in the process of wrapping the individual strips around the structure (cf. Figure 1).

In a next step of the method, at least one cladding strip (4), notably a metal cladding strip, may be arranged around the first and second type of mineral wool strips (2, 3) in a radial direction (R) of the structure (1). The step of arranging the at least one cladding strip (4) is not particularly limited, and the at least one cladding strip may e.g. be wrapped around the pipe-like structure to be insulated.

According to a further embodiment, the at least one cladding strip (4) is arranged around at least two mineral wool strips of the first type (2) which are spaced apart from each other along the axis direction (A) of the structure (1). According to a particular embodiment, both ends of the at least one cladding strip (4) are arranged over the first type of mineral wool strips, more preferably in a center region with respect to the length on the axis direction (A) of the first type of mineral wool strips.

According to a specific embodiment, the method of the present invention further comprises the step of arranging a third type of mineral wool strips (2') and a fourth type of mineral wool strips (3') adjacently to each other between the first insulation layer and the at least one cladding strip (4) in an axis direction (A) of the structure to form a second insulation layer (6),
wherein the third type of mineral wool strips (2') has a higher compression strength than the fourth type of mineral wool strips (3'), and
wherein the third type of mineral wool strips (2') is arranged at least partly and preferably fully over the first type of mineral wool strips (2).

The step of arranging the third type of mineral wool strips (2') and the fourth type of mineral wool strips (3') is not particularly limited, and the same way of arranging may be used as described above for the first type of mineral wool strips and the second type of mineral wool strips (2, 3). The at least one metal cladding strip (4) is then arranged around the third and fourth type of mineral wool strips in a radial direction (R) of the structure.

The present invention provides an insulating system for a pipe-like structure which achieves excellent thermal insulation and fire protection of the pipe-like structure to be insulated, while at the same time it is possible to refrain from using a spacer construction to support the cladding surrounding the insulation layer, which would result in loss of thermal insulation of the insulation system due to being a thermal bridge.

### Reference signs

- 1: pipe
- 2: first type of mineral wool strips (High compressive strength)
- 3: second type of mineral wool strips
- 2': third type of mineral wool strips (High compressive strength)
- 3': fourth type of mineral wool strips
- 4: metal cladding strip
- 5: first insulation layer
- 6: second insulation layer
- R: radial direction of the pipe
- A: axis direction of the pipe

## Claims

1. An insulated pipe-like structure (1) comprising:
- a pipe-like structure;
- a plurality of individual pieces of a first type of mineral wool strips (2) arranged around the pipe-like structure in a radial direction (R) of the structure (1);
- a plurality of individual pieces of a second type of mineral wool strips (3) arranged around the structure in a radial direction (R) of the structure (1);
wherein
- the first type of mineral wool strips (2) has a higher compression strength than the second type of mineral wool strips (3); and
- the first type of mineral wool strips (2) and the second type of mineral wool strips (3) are arranged adjacent to each other and alternately in an axis direction (A) of the structure (1) to form a first insulation layer (5),
wherein the insulated pipe-like structure (1) is adapted to support a metal cladding surrounding the first and second type of mineral wool strips (2, 3).

2. The insulated pipe-like structure (1) according to claim 1, wherein the insulated pipe-like structure (1) comprises at least one cladding strip (4), notably a metal cladding strip, arranged around the first and second type of mineral wool strips (2, 3) in a radial direction (R) of the structure (1).

3. The insulated pipe-like structure (1) according to claim 2, wherein both ends of the at least one cladding strip (4) are arranged over the first type of mineral wool strips (2).

4. The insulated pipe-like structure (1) according to claim 3, wherein both ends of the at least one cladding strip (4) are arranged in a center region with respect to the width on the axis direction (A) of the first type of mineral wool strips (2).

5. The insulated pipe-like structure (1) according to any one of claims 1 to 4, wherein the first type of mineral wool strips (2) is a mineral wool blanket having: a density in the range 60 kg/m³ to 140 kg/m³; and a thermal conductivity at 300°C which is ≤ 93 mW/m.K and ≥ 85 mW/m.K according to EN ISO 8497.

6. The insulated pipe-like structure (1) according to any one of claims 1 to 5, wherein the second type of mineral wool strips (3) is a wired mesh mineral wool mat having: a density which is ≤ 120 kg/m³; and a thermal conductivity at 300°C which is ≤ 120 mW/m.K according to EN12667.

7. The insulated pipe-like structure (1) according to any of claims 1 to 6, wherein the first type of mineral wool strips (2) and the second type of mineral wool strips (3) have substantially the same density.

8. The insulated pipe-like structure (1) according to any one of claims 1 to 7, further comprising a second insulation layer (6) arranged over the first insulation layer (5), notably between the first insulation layer and the at least one cladding strip (4),
wherein the second insulation layer (6) comprises a plurality of individual pieces of a third type of mineral wool strips (2') and a plurality of individual pieces of a fourth type of mineral wool strips (3') arranged adjacent to each other in an axis direction (A) of the structure (1),
wherein the third type of mineral wool strips (2') has a higher compression strength than the fourth type of mineral wool strips (3'), and
wherein the third type of mineral wool strips (2') is arranged at least partly over the first type of mineral wool strips (2).

9. The insulated pipe-like structure (1) according to claim 8, wherein the at least one cladding strip (4) is configured to be arranged around at least two mineral wool strips of the third type (2') which are spaced apart from each other along the axis direction (A) of the structure (1).

10. The insulated pipe-like structure (1) according to claim 8 or claim 9, wherein the first type of mineral wool strips (2), the second type of mineral wool strips (3), the third type of mineral wool strips (2') and the fourth type of mineral wool strips (3') have a difference of density between each type of mineral wool strips which is less than 20%,.

11. The insulated pipe-like structure (1) according any one of claims 1 to 10, wherein the insulated pipe-like structure is selected from: a ventilating and air conditioning (HVAC) duct; a duct; a pipe; a metal pipe; a pipe elbow; a boiler; a chimney and/or a tank.

12. The insulated pipe-like structure (1) according any one of claims 1 to 11, wherein the compression strength of the first type of mineral wool strips (2) is at least 8 kPa, preferably at least 10 kPa, more preferably at least 11 kPa, and even more preferably at least 12 kPa, in accordance with EN826.

13. A method for insulating a pipe-like structure (1), comprising the steps of:
arranging a plurality of individual pieces of a first type of mineral wool strips (2) and a plurality of individual pieces of a second type of mineral wool strips (3) adjacent to each other and alternately in an axis direction (A) of the structure (1) to form a first insulation layer (5); and
arranging at least one cladding strip (4), notably a metal cladding strip, around the first and second type of mineral wool strips (2, 3) in a radial direction (R) of the structure (1);
**characterized in that** the first type of mineral wool strips (2) has a higher compression strength than the second type of mineral wool strips (3),
and preferably wherein the at least one cladding strip (4) is arranged around at least two mineral wool strips of the first type (2) which are spaced apart from each other along the axis direction (A) of the structure (1).

14. The method according to claim 13, further comprising the step of arranging a plurality of individual pieces of a third type of mineral wool strips (2') and a plurality of individual pieces of a fourth type of mineral wool strips (3') adjacent to each other between the first insulation layer (5) and the at least one cladding strip (4) in an axis direction (A) of the structure (1) to form a second insulation layer (6),
wherein the third type of mineral wool strips (2') has a higher compression strength than the fourth type of mineral wool strips (3'), and
wherein the third type of mineral wool strips (2') is arranged at least partly over the first type of mineral wool strips (2).

15. A method for insulating a pipe-like structure (1) in accordance with any of claims 13 to 14, comprising:
wrapping a plurality of individual pieces of a first type of mineral wool strips (2) around the pipe-like structure and subsequently joining the two terminal edges of the first type of mineral wool strips (2) contacting each other;
subsequently wrapping a plurality of individual pieces of a second type of mineral wool strips (3) around the pipe-like structure and adjacent to the first type of mineral wool strips (2) and subsequently joining the two terminal edges of contacting each other; and
subsequently arranging at least one cladding strip (4), notably a metal clad ding strip, around the first and second type of mineral wool strips (2, 3) in a radial direction (R) of the structure (1);
wherein the first type of mineral wool strips (2) has a higher compression strength than the second type of mineral wool strips (3).

## Patentansprüche

1. Isolierte rohrartige Struktur (1), umfassend:
- eine rohrartige Struktur;
- eine Vielzahl von einzelnen Stücken einer ersten Art von Mineralwollestreifen (2), die um die rohrartige Struktur in einer radialen Richtung (R) der Struktur (1) angeordnet sind;
- eine Vielzahl von einzelnen Stücken einer zweiten Art von Mineralwollestreifen (3), die um die Struktur in einer radialen Richtung (R) der Struktur (1) angeordnet sind;
wobei
- die erste Art von Mineralwollestreifen (2) eine höhere Druckfestigkeit als die zweite Art von Mineralwollestreifen (3) aufweist; und
- die erste Art von Mineralwollestreifen (2) und die zweite Art von Mineralwollestreifen (3) aneinander angrenzend und abwechselnd in einer Achsenrichtung (A) der Struktur (1) zur Bildung einer ersten Isolierschicht (5) angeordnet sind,
wobei die isolierte rohrartige Struktur (1) geeignet ist, eine Metallumhüllung zu stützen, welche die erste und die zweite Art von Mineralwollestreifen (2, 3) umgibt.

2. Isolierte rohrartige Struktur (1) nach Anspruch 1, wobei die isolierte rohrartige Struktur (1) mindestens einen Umhüllungsstreifen (4) umfasst, insbesondere einen Metall-Umhüllungsstreifen, angeordnet um die erste und die zweite Art von Mineralwollestreifen (2, 3) in einer radialen Richtung (R) der Struktur (1).

3. Isolierte rohrartige Struktur (1) nach Anspruch 2, wobei beide Enden des mindestens einen Umhüllungsstreifens (4) über der ersten Art von Mineralwollestreifen (2) angeordnet sind.

4. Isolierte rohrartige Struktur (1) nach Anspruch 3, wobei beide Enden des mindestens einen Umhüllungsstreifens (4) in einem mittleren Bereich in Bezug auf die Breite auf der Achsenrichtung (A) der ersten Art von Mineralwollestreifen (2) angeordnet sind.

5. Isolierte rohrartige Struktur (1) nach einem der Ansprüche 1 bis 4, wobei die erste Art von Mineralwollestreifen (2) ein Mineralwollemantel mit einer Dichte im Bereich von 60 kg/m³ bis 140 kg/m³ und einer Wärmeleitfähigkeit bei 300°C von ≤ 93 mW/m.K und ≥ 85 mW/m.K gemäß EN ISO 8497 ist.

6. Isolierte rohrartige Struktur (1) nach einem der Ansprüche 1 bis 5, wobei die zweite Art von Mineralwollestreifen (3) eine Drahtnetz-Mineralwollematte mit einer Dichte von ≤ 120 kg/m³ und einer Wärmeleitfähigkeit bei 300°C von ≤ 120 mW/m.K gemäß EN12667 ist.

7. Isolierte rohrartige Struktur (1) nach einem der Ansprüche 1 bis 6, wobei die erste Art von Mineralwollestreifen (2) und die zweite Art von Mineralwollestreifen (3) im Wesentlichen die gleiche Dichte aufweisen.

8. Isolierte rohrartige Struktur (1) nach einem der Ansprüche 1 bis 7, weiter umfassend eine zweite Isolierschicht (6), die über der ersten Isolierschicht (5), insbesondere zwischen der ersten Isolierschicht und dem mindestens einen Umhüllungsstreifen (4), angeordnet ist,
wobei die zweite Isolierschicht (6) eine Vielzahl von einzelnen Stücken einer dritten Art von Mineralwollestreifen (2') und eine Vielzahl von einzelnen Stücken einer vierten Art von Mineralwollestreifen (3') umfasst, die aneinander angrenzend in einer Achsenrichtung (A) der Struktur (1) angeordnet sind,
wobei die dritte Art von Mineralwollestreifen (2') eine höhere Druckfestigkeit als die vierte Art von Mineralwollestreifen (3') aufweist und
wobei die dritte Art von Mineralwollestreifen (2') mindestens teilweise über der ersten Art von Mineralwollestreifen (2) angeordnet ist.

9. Isolierte rohrartige Struktur (1) nach Anspruch 8, wobei der mindestens eine Umhüllungsstreifen (4) zum Anordnen um mindestens zwei Mineralwollestreifen der dritten Art (2'), welche entlang der Achsenrichtung (A) der Struktur (1) voneinander beabstandet sind, angeordnet ist.

10. Isolierte rohrartige Struktur (1) nach Anspruch 8 oder Anspruch 9, wobei die erste Art von Mineralwollestreifen (2), die zweite Art von Mineralwollestreifen (3), die dritte Art von Mineralwollestreifen (2') und die vierte Art von Mineralwollestreifen (3') einen Dichteunterschied zwischen der jeweiligen Art der Mineralwollestreifen von weniger als 20% aufweisen.

11. Isolierte rohrartige Struktur (1) nach einem der Ansprüche 1 bis 10, wobei die isolierte rohrartige Struktur ausgewählt ist aus: einem ventilierenden und klimatisierenden Kanal (HVAC); einem Kanal; einem Rohr; einem Metallrohr; einem Rohrknie; einem Kessel; einem Kamin und/oder einem Behälter.

12. Isolierte rohrartige Struktur (1) nach einem der Ansprüche 1 bis 11, wobei die Druckfestigkeit der ersten Art von Mineralwollestreifen (2) mindestens 8 kPa, bevorzugt mindestens 10 kPa, mehr bevorzugt mindestens 11 kPa und noch mehr bevorzugt mindestens 12 kPa gemäß EN826 beträgt.

13. Verfahren zum Isolieren einer rohrartigen Struktur (1), umfassend die Schritte: Anordnen einer Vielzahl von einzelnen Stücken einer ersten Art von
Mineralwollestreifen (2) und einer Vielzahl von einzelnen Stücken einer zweiten Art von Mineralwollestreifen (3) aneinander angrenzend und abwechselnd in einer Achsenrichtung (A) der Struktur (1) zur Bildung einer ersten Isolierschicht (5); und
Anordnen mindestens eines Umhüllungsstreifens (4), insbesondere eines Metall-Umhüllungsstreifens, um die erste und die zweite Art von Mineralwollestreifen (2, 3) in einer radialen Richtung (R) der Struktur (1);
**dadurch gekennzeichnet, dass** die erste Art von Mineralwollestreifen (2) eine höhere Druckfestigkeit als die zweite Art von Mineralwollestreifen (3) aufweist,
und wobei der mindestens eine Umhüllungsstreifen (4) bevorzugt um mindestens zwei Mineralwollestreifen der ersten Art (2) angeordnet ist, welche entlang der Achsenrichtung (A) der Struktur (1) voneinander beabstandet sind.

14. Verfahren nach Anspruch 13, weiter umfassend den Schritt des Anordnens einer Vielzahl von einzelnen Stücken einer dritten Art von Mineralwollestreifen (2') und einer Vielzahl von einzelnen Stücken einer vierten Art von Mineralwollestreifen (3') aneinander angrenzend zwischen der ersten Isolierschicht (5) und dem mindestens einen Umhüllungsstreifen (4) in einer Achsenrichtung (A) der Struktur (1) zur Bildung einer zweiten Isolierschicht (6),
wobei die dritte Art von Mineralwollestreifen (2') eine höhere Druckfestigkeit als die vierte Art von Mineralwollestreifen (3') aufweist und
wobei die dritte Art von Mineralwollestreifen (2') mindestens teilweise über der ersten Art von Mineralwollestreifen (2) angeordnet ist.

15. Verfahren zum Isolieren einer rohrartigen Struktur (1) nach einem der Ansprüche 13 bis 14, umfassend:
Wickeln einer Vielzahl von einzelnen Stücken einer ersten Art von Mineralwollestreifen (2) um die rohrartige Struktur und darauffolgend Verbinden der zwei endständigen Kanten der ersten Art von Mineralwollestreifen (2), die sich gegenseitig berühren;
darauffolgend Wickeln einer Vielzahl von einzelnen Stücken einer zweiten Art von Mineralwollestreifen (3) um die rohrartige Struktur angrenzend an die erste Art von Mineralwollestreifen (2) und darauffolgend Verbinden der zwei endständigen Kanten, die sich gegenseitig berühren; und
darauffolgend Anordnen mindestens eines Umhüllungsstreifens (4), insbesondere eines Metall-Umhüllungsstreifens, um die erste und die zweite Art von Mineralwollestreifen (2, 3) in einer radialen Richtung (R) der Struktur (1);
wobei die erste Art von Mineralwollestreifen (2) eine höhere Druckfestigkeit als die zweite Art von Mineralwollestreifen (3) aufweist.

## Revendications

1. Structure isolée en forme de tuyau (1) comprenant :
- une structure en forme de tuyau ;
- une pluralité de pièces individuelles d'un premier type de bandes de laine minérale (2) agencées autour de la structure en forme de tuyau dans une direction radiale (R) de la structure (1) ;
- une pluralité de pièces individuelles d'un second type de bandes de laine minérale (3) agencées autour de la structure dans une direction radiale (R) de la structure (1) ;
dans laquelle
- le premier type de bandes de laine minérale (2) a une résistance à la compression plus élevée que le second type de bandes de laine minérale (3) ; et
- le premier type de bandes de laine minérale (2) et le deuxième type de bandes de laine minérale (3) sont disposés adjacents les uns aux autres et alternativement dans une direction axiale (A) de la structure (1) pour former une première couche d'isolation ( 5),
dans laquelle la structure de type tuyau isolée (1) est adaptée pour supporter un revêtement métallique entourant les premier et second types de bandes de laine minérale (2, 3).

2. Structure isolée en forme de tuyau (1) selon la revendication 1, dans laquelle la structure isolée en forme de tuyau (1) comprend au moins une bande de revêtement (4), notamment une bande de revêtement métallique, disposée autour des premier et second types de bandes de laine minérale (2, 3) dans une direction radiale (R) de la structure (1).

3. Structure isolée en forme de tuyau (1) selon la revendication 2, dans laquelle les deux extrémités de la au moins une bande de revêtement (4) sont disposées sur le premier type de bandes de laine minérale (2).

4. Structure isolée en forme de tuyau (1) selon la revendication 3, dans laquelle les deux extrémités de la au moins une bande de revêtement (4) sont disposées dans une région centrale par rapport à la largeur dans la direction axiale (A) du premier type de bandes de laine minérale (2).

5. Structure isolée en forme de tuyau (1) selon l'une quelconque des revendications 1 à 4, dans laquelle le premier type de bandes de laine minérale (2) est un matelas de laine minérale ayant : une densité dans la plage de 60 kg/m³ à 140 kg/m³ ; et une conductivité thermique à 300°C qui est ≤ 93 mW/m.K. et ≥ 85 mW/m.K. selon EN ISO 8497.

6. Structure isolée en forme de tuyau (1) selon l'une quelconque des revendications 1 à 5, dans laquelle le second type de bandes de laine minérale (3) est une nappe grillagée de laine minérale ayant : une densité qui est ≤ 120 kg/m³ ; et une conductivité thermique à 300°C qui est ≤ 120 mW/m.K selon EN12667.

7. Structure isolée en forme de tuyau (1) selon l'une quelconque des revendications 1 à 6, dans laquelle le premier type de bandes de laine minérale (2) et le second type de bandes de laine minérale (3) ont sensiblement la même densité.

8. Structure isolée en forme de tuyau (1) selon l'une quelconque des revendications 1 à 7, comprenant en outre une seconde couche d'isolation (6) agencée sur la première couche d'isolation (5), notamment entre la première couche d'isolation et la au moins une bande de revêtement (4),
dans laquelle la deuxième couche isolante (6) comprend une pluralité de pièces individuelles d'un troisième type de bandes de laine minérale (2') et une pluralité de pièces individuelles d'un quatrième type de bandes de laine minérale (3') agencées adjacentes les unes aux autres dans une direction axiale (A) de la structure (1),
dans laquelle le troisième type de bandes de laine minérale (2') a une résistance à la compression plus élevée que le quatrième type de bandes de laine minérale (3'), et
dans laquelle le troisième type de bandes de laine minérale (2') est disposé au moins partiellement sur le premier type de bandes de laine minérale (2).

9. Structure isolée en forme de tuyau (1) selon la revendication 8, dans laquelle la au moins une bande de revêtement (4) est configurée pour être disposée autour d'au moins deux bandes de laine minérale du troisième type (2') qui sont espacées. les uns des autres le long de la direction axiale (A) de la structure (1).

10. Structure isolée en forme de tuyau (1) selon la revendication 8 ou la revendication 9, dans laquelle le premier type de bandes de laine minérale (2), le deuxième type de bandes de laine minérale (3), le troisième type de bandes de laine minérale (2') et le quatrième type de bandes de laine minérale (3') ont une différence de densité entre chaque type de bandes de laine minérale qui est inférieure à 20 %.

11. Structure isolée en forme de tuyau (1) selon l'une quelconque des revendications 1 à 10, dans laquelle la structure isolée en forme de tuyau est choisie parmi : un conduit de ventilation et de conditionnement d'air (HVAC) ; un conduit; un tuyau; un tuyau métallique; un coude de tuyau; une chaudière; une cheminée et/ou un réservoir.

12. Structure isolée en forme de tuyau (1) selon l'une quelconque des revendications 1 à 11, dans laquelle la résistance à la compression du premier type de bandes de laine minérale (2) est d'au moins 8 kPa, de préférence d'au moins 10 kPa, plus préférablement d'au moins 11 kPa, et encore plus préférentiellement d'au moins 12 kPa, conformément à EN826.

13. Procédé pour isoler une structure en forme de tuyau (1), comprenant les étapes de :
agencer une pluralité de pièces individuelles d'un premier type de bandes de laine minérale (2) et d'une pluralité de pièces individuelles d'un deuxième type de bandes de laine minérale (3) adjacentes les unes aux autres et alternativement dans une direction axiale (A) de la structure (1) pour former une première couche isolante (5); et
disposer au moins une bande de revêtement (4), notamment une bande de revêtement métallique, autour des premier et second types de bandes de laine minérale (2, 3) selon une direction radiale (R) de la structure (1) ;
**caractérisé en ce que** le premier type de bandes de laine minérale (2) a une résistance à la compression plus élevée que le second type de bandes de laine minérale (3),
et de préférence dans lequel la au moins une bande de revêtement (4) est disposée autour d'au moins deux bandes de laine minérale du premier type (2) qui sont espacées l'une de l'autre le long de la direction axiale (A) de la structure (1).

14. Procédé selon la revendication 13, comprenant en outre l'étape de disposer une pluralité de pièces individuelles d'un troisième type de bandes de laine minérale (2') et une pluralité de pièces individuelles d'un quatrième type de bandes de laine minérale (3') adjacentes par rapport à l'autre entre la première couche isolante (5) et la au moins une bande de revêtement (4) dans une direction axiale (A) de la structure (1) pour former une deuxième couche isolante (6),
dans lequel le troisième type de bandes de laine minérale (2') a une résistance à la compression plus élevée que le quatrième type de bandes de laine minérale (3'), et
dans lequel le troisième type de bandes de laine minérale (2') est disposé au moins partiellement sur le premier type de bandes de laine minérale (2).

15. Procédé pour isoler une structure de type tuyau (1) selon l'une quelconque des revendications 13 à 14, comprenant :
enrouler une pluralité de pièces individuelles d'un premier type de bandes de laine minérale (2) autour de la structure en forme de tuyau et ensuite joindre les deux bords terminaux du premier type de bandes de laine minérale (2) en contact l'un avec l'autre ;
enrouler ensuite une pluralité de pièces individuelles d'un deuxième type de bandes de laine minérale (3) autour de la structure en forme de tuyau et adjacentes au premier type de bandes de laine minérale (2) et ensuite joindre les deux bords terminaux en contact l'un avec l'autre ; et
disposer ensuite au moins une bande de revêtement (4), notamment une bande de revêtement métallique, autour des premier et second types de bandes de laine minérale (2, 3) selon une direction radiale (R) de la structure (1) ;
dans lequel le premier type de bandes de laine minérale (2) a une résistance à la compression plus élevée que le second type de bandes de laine minérale (3).
